# EUROPEAN PATENT SPECIFICATION

(11) **EP 1 228 693 B1**
(45) Date of publication and mention of the grant of the patent: **08.03.2006**
(21) Application number: 02250318.9
(22) Date of filing: 17.01.2002
(51) Int. Cl.: A22B 5/00, A22B 5/20

(54) **Apparatus and method for cutting through the ribs of a middle from a carcass**
Verfahren und Vorrichtung zum Schneiden von Rippen in Karkashälften
Procédé et dispositif de découpe des côtes de demi-carcasses

(30) Priority: 18.01.2001 DK 200100093
(43) Date of publication of application: 07.08.2002
(73) Proprietor: Slagteriernes Forskningsinstitut, 4000 Roskilde (DK)
(72) Inventor: Folkmann, Peter, 4140 Borup (DK)
(74) Representative: Bayliss, Geoffrey Cyril

(56) References cited:
- EP-A- 0 502 581
- EP-A- 1 059 037
- US-A- 3 771 196
- US-A- 5 725 424
- US-A- 6 089 968

## Description

The present invention relates to an apparatus and a method for cutting through the ribs of a middle from a carcass, for example, a pig carcass.

After the splitting of pig carcasses, the carcass halves are cut into fore-ends, middles and hams. These parts undergo separate processing, which may - depending on the desired product types - take place at different locations in the slaughterhouse. The middles can be divided into loin and belly by a lengthwise cut placed at a specific distance from the spinal column. The division may be carried out by an operator using a machine with a band saw and a belt to convey the middles. The operator seizes the middle by its edges, assesses the middle to find the correct placing of the cut and guides it towards and past the band saw in accordance with his assessment. However, the cutting line will often be inaccurate because the operator has to have a good eye to divide correctly.

Many slaughterhouses today use another machine with a circular saw blade and a circular knife positioned in succession over a conveyor belt for the middles. Here too the operator guides the middles in relation to the blades. First the saw blade cuts through the ribs and then the circular knife cuts through meat and fat to divide the middle into loin and belly. The machine produces less sawing dust than the band saw, but it is more difficult for the operator to control the middles and the resulting division may therefore be rather inaccurate.

EP 1059 037 A2 (Slagteriernes Forskningsinstitut) describes an apparatus for gripping and retaining a part carcass of a split carcass in the spinal column in order to enable cutting of the part carcass. The apparatus comprises a mainly rectilinear conveyor with retention elements, which are connected as links of an endless chain. The elements are designed to successively grab the spinal column in the part carcass and retain it in the column while the middle is conveyed past the various cutting tools. One important advantage of using this rectilinear conveyor is partly that the cutting processes can be fully automated, and partly that the fixing and cutting can be performed in a smooth movement constituting a natural continuation of the conveyance of the middle on a conveyor belt. In one embodiment the part carcass is a middle which is first cut in the meat part by a circular knife cutting from the rind side up to the under side of the ribs after which it is cut in the ribs by a circular saw cutting through the ribs at a distance from the spinal column. This procedure provides separation into a loin piece and a belly piece. One of the disadvantages of this design is that the spinal column is straightened by retention in the apparatus so that the cut through the ribs in particular will run very differently from cuts controlled by the operator where the middles are placed on a belt.

EP 0985 348 A2 (ATTEC DANMARK A/S) describes an automatic apparatus for lengthwise cutting of middles. The middles are fixed in the apparatus with the rind side pressed down against a conveyor belt or the like. An underlying large-diameter circular knife then cuts from the rind side through the meat and perhaps further up through the meat and perhaps further up through the ribs dividing the middle into loin and belly. In one embodiment the back part is fixed by rollers lying against the rib parts at the spinal column and pressing the rind side of the back against a contoured back plate, which gives the spinal column a curved course. This will give the cutting line mainly the same course as the cutting line from operator-controlled division on a belt. In another embodiment the spinal column is gripped by a conveyor system similar to the one described in EP 1059 037 A2 whereby, as mentioned above, the spinal column is straightened resulting in an undesirable position of the cut. The cutting is performed by an underlying circular knife first cutting up to the under side of the ribs after which a circular saw blade cuts through the rib side. This work process may have substantial disadvantages compared with the above-mentioned operator-controlled cutting where the ribs are first cut by a saw blade and then meat and fat are cut by a circular knife. There will for instance be problems of wear on the knife cutting through meat and fat.

US 3,771,196 discloses an animal processing machine including a loin knife mechanism constructed and arranged to optimise the loin cut from the animal side. The machine includes carriage means with a scribe saw and a U-shaped loin pull knife. The carriage means movement is controlled to manipulate the scribe saw and the U-shaped loin pull knife automatically to cut the loin. In use, the carriage means is moved laterally of the conveyor to squeeze and bias the loin pull knife during operation thereby to provide a suitable cut of the fatback at the tail end of the animal side so as to optimise the loin cut from the animal side.

An object of the present invention is to provide an apparatus which, by means of a line conveyor for spinal column parts, is able to perform fully automated rib cutting with a correct position of the cut and without occurrence of bone splinters. The apparatus is preferably to be designed for carrying out fully automated division of a middle into loin and belly parts by first cutting the ribs and then cutting the meat and fat part of the middle in order to avoid the above-mentioned disadvantages of wear on the circular knife etc.

This invention provides an apparatus for cutting through the ribs of a middle from a carcass, comprising a line conveyor for a middle; a cutting device with a rotating circular blade for cutting ribs in the middle from the rib side of the middle while it is conveyed by the conveyor, and a depth stop for the circular blade with a sliding surface designed to abut against the rib side of the middle during cutting; and a suspension for the cutting device providing a pressure on the rib side from the depth stop during cutting and allowing the cutting device to move according to the shape of the rib side at the cutting line guided by contact of the depth stop with the rib surface; wherein the line conveyor has retention means comprising grippers for gripping and retaining for the spinal column parts of a middle, and transport means for conveyance of a retained middle with the spinal column parts mainly lying in the conveyor's direction of conveyance; and in that the depth stop lies on the side of the blade closest to the retention means for the spinal column parts of the middle.

An important aspect of the invention is the use of a depth stop, which limits the cutting depth, and the use of a flexible suspension, which makes the cutting device follow the rib surface at the cutting line controlled by the pressure of the depth stop on the rib surface, combined with the fixation of the spinal column. This provides a high degree of mutual control between the middle and the cutting blade as well as high quality cutting. The apparatus can be designed to perform fully automated cutting with a precise position of the cut and with a cutting course and quality that are better than or equal to the one achieved by traditional division.

In connection with the division of middles into loin and belly the apparatus can be designed to perform first rib cutting and then cutting of the meat and fat part of the middle thereby exploiting the advantages of this sequence of cuttings, i.e. reduced wear on the blade cutting through the meat and fat as it does not hit ribs or has to cut through ribs, avoidance of the blade cutting incisions in ribs or cutting off small pieces of rib in case of misalignment of rib blade and meat blade and establishment of a cutting of the meat immediately after the last rib where it is normally difficult for the meat blade to cut through the meat if the cutting of the meat is carried out first.

Advantageous embodiments of the apparatus according to the invention are stated in claims 2 to 12.

The depth stop can thus be on the side of the blade closest to the retention means for the spinal column parts of the middle to avoid stress on the free-hanging part of the ribs from the pressure of the depth stop which would otherwise make the ribs break off just before being cut through.

The apparatus may comprise means designed to produce a pressure from the depth guide on the rib surface during cutting, which is no higher than necessary to keep the depth stop in constant contact with the rib surface, for instance a pressure of 10 to 100 N. The specific pressure does not have to be constant throughout the cutting of the ribs of the middle.
Applying less force will reduce the risk of formation of bone splinters.

The apparatus may comprise means to reduce the pressure from the cutting device on the rib side thereby, for instance, avoiding having the cutting device rest with all its weight on the rib side.

The apparatus may comprise means to move the blade sideways during cutting, away from the retention means for the spinal column parts. This allows the position of the cut to be changed during cutting to achieve an optimum cutting course, corresponding, for instance, to the cutting course achieved in traditional cutting on a conveyor belt or other desirable cutting courses, which are not parallel with the spinal column. Squeezing is avoided by cutting away from the retention means.

The apparatus may be designed to apply a pressure on the rind side of the middle in the direction of the cutting site, which is zero (i.e. non-existent) or considerably less than the pressure applied by the depth stop on the rib side. It is an advantage that there is no upwards impact on the free ends of the ribs during cutting. This produces fewer bone splinters and a more accurate position of the cut.

In accordance with the above, one embodiment is characterized in that the middle is unsupported on the rind side during cutting.

The circular blade and the plane in which the suspension allows the blade to move can be inclined, with the active cutting area of the blade being closer to the retention means for the spinal column parts than the opposite, inactive area of the blade. This allows some degree of compensation for wider or narrower curvature of the ribs in different middles giving the ribs of the loin part the desired length without any other form of compensation for differences of curvature.

The circular blade and its plane of movement may for instance be inclined at an angle of 45" to 65° in relation to the split plane of the middle.

The suspension may be designed in various ways. In one embodiment the cutting device is suspended from an arm that can swing around an axle, which is ma.inly perpendicular to the blade plane and is at a horizontal distance from the blade's axis of rotation. This enables the blade to move in a plane, which is mainly perpendicular to the axle.

The apparatus may comprise means to move the cutting device away from the rib side in a controlled way, thereby avoiding cutting the rib-free part of the middle.

It may have means for controlled adjustment of the blade's sideways position prior to cutting in order to achieve optimum adjustment of the cutting position according to the characteristics of the individual middle.

The apparatus may comprise a second cutting device with a circular blade to allow subsequent cutting of meat and fat from the rind side of the middle and division of the middle into loin and belly. This circular blade is preferably placed downstream of the circular blade cutting the ribs. This achieves the above-mentioned advantages connected with first cutting the ribs and then cutting meat and fat.

The apparatus may comprise means to move the blade of the second cutting device sideways during cutting, towards or away from the retention means for the spinal column parts, in order to achieve an optimum cutting course.

Furthermore, it may comprise means for adjusting the sideways position of the blade of the second cutting device in a controlled way prior to cutting and means for adjusting any inclination of the blade.

The invention also provides a method for cutting through ribs of a middle from a carcass, in which the middle is conveyed by means of a line conveyor with the spinal column parts mainly lying in the conveyor's direction of conveyance; and during its conveyance by the conveyor the middle is conveyed past a cutting device with a rotating circular blade placed on the rib side of the middle, which performs cutting of the ribs guided by a depth stop for the circular blade with a sliding surface abutting against the rib side of the middle with a pressuring during cutting, whereby the cutting device is allowed to move in accordance with the shape of the rib side at the cutting line guided by the contact of the depth stop with the rib surface; wherein retention means on the line conveyor are made to grip and retain a middle by its spinal column parts and in that the depth stop lies on the side of the blade closest to the retention means for the spinal column parts of the middle.

Before and/or during the cutting of the ribs the blade may perform a sideways movement in order for the cut to run at the correct distance from the spinal column and/or according to a different line than the line parallel with the direction of conveyance.

By means of a second cutting device with a circular blade, subsequent cutting of meat and fat may be carried out from the rind side of the middle and division of the middle into loin and belly.

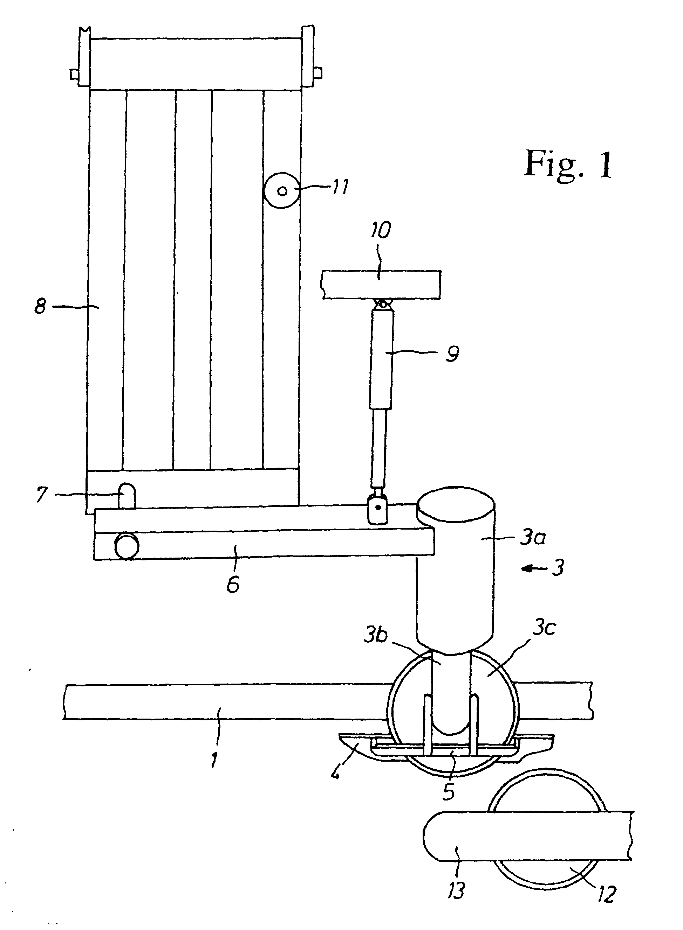

The invention is described in detail below with reference to the drawings in which
- Fig. 1 shows a side view of an apparatus for lengthwise division of a middle; and
- Fig. 2 shows a rear view of the apparatus.

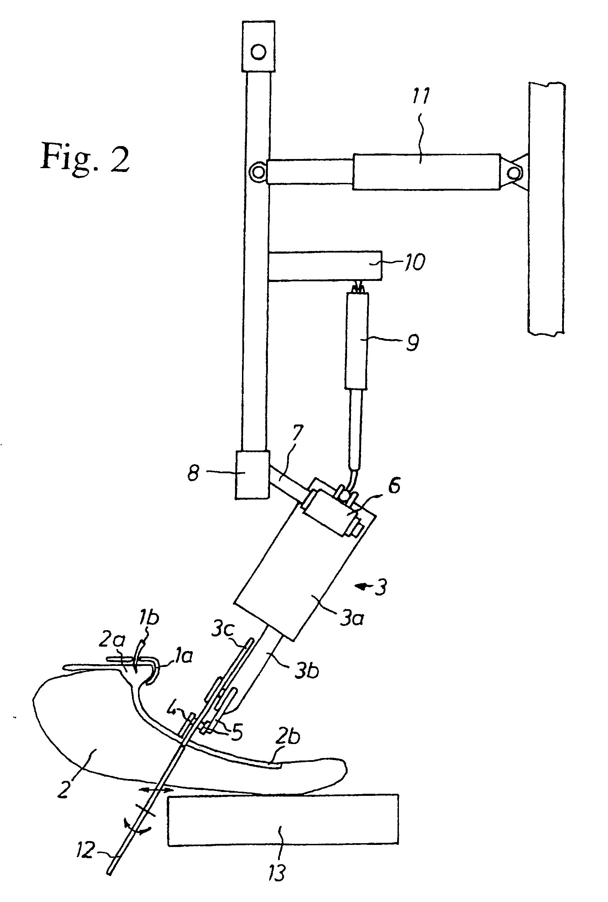

The apparatus in Figs. I and 2 comprises a line conveyor *1,* which seizes and holds the spinal column part 2a of a middle 2 from a carcass, for example, a pig carcass by means of retention means. In Fig. 2 these means are shown by a gripping member 1a and a claw 1b, which are pressed into the spinal column part and lock the part in the conveyor. EP 1059 037 A2 has a more detailed description of the conveyor. The conveyor conveys the middle towards a saw 3 designed to cut through the ribs 2b of the middle at a distance from the spinal column. The saw comprises a motor 3a, a transmission member 3b and a saw blade 3c with a relatively small diameter, for instance 20 cm. The saw has a depth stop 4, which is fitted to the side of the saw blade closest to the spinal column. The depth stop is fixed to the housing of the transmission member 3b by means of intermediate pieces 5. The depth stop serves to guide the saw so that the saw blade does not cut deeper into the middle than is just sufficient to cut through the ribs. The cutting depth is for instance set to 1.5 cm.

The depth stop is cut at an angle on the side closest to an incoming middle so that it will automatically slide up onto the rib surface of the middle when the middle is conveyed under the stop.

The saw 3 is suspended in an arm 6, which can swing around an inclined axle 7 going through the arm. The axle 7 is fixed to a frame 8 to form an angle of approximately 60° to the vertical. The saw blade 3c can thus swing in a circular curve in a plane containing the blade and forming an angle of 60° in relation to the horizontal and mainly running parallel with the conveyor's direction of conveyance. An air cylinder 9 between an arm 10 on the frame 8 and the swivel-type arm 6 ensures that the saw is held up and limits the saw's vertical pressure on the middle. The cylinder lifts the saw to working height as the middle approaches to allow the rib side to slide against the inclined cut of the depth stop and to press the saw up to a height where the middle slides under the stop, after which cutting can start.

The cylinder 9 is designed to reduce the pressure of the depth stop on the rib side of the middle during cutting as it pulls upwards so that the saw rests only with so much of its weight on the rib surface that the stop remains just in contact with the rib surface during cutting. The pressure can have a relatively constant value which is for instance 10 to 100 N or it can take on specific values for instance within the same interval of 10 to 100 N. The cylinder 9 also has the function of lifting the saw from the middle immediately after all the ribs have been cut in order to avoid unnecessary sawing in the rib-free area of the middle.

The frame 8 is suspended in two spindles and can by means of a servomotor 1 move the saw 3 sideways so that it cuts closer to or further away from the spinal column of the middle. Two different kinds of side adjustments are possible:

One adjustment prior to the start of the cutting is to adjust the cut according to the characteristics of the actual middle, for instance on the basis of the middle's weight, width, length or distance from the back side or breast side to the spinal column. In this way the main adjustment of the cut can be performed so that the rib parr of the loin piece obtains a specific weight (including the weight of the meat between the ribs) and/or length. This is important for the production of the so-called "spareribs". Another kind of side adjustment of the saw can be performed continuously during the sawing, for instance to allow the ribs to be divided by a cutting course corresponding to the one achieved by traditional cutting on a belt, so that, for instance, the ribs of the loin piece achieve a length extending from 40 mm at the neck end to 70 mm at the hip end. This can be achieved by successively moving the saw sideways away from the spinal column parts of the middle during cutting.

The saw blade 3c and the plane in which the suspension allows the blade to move are inclined so that the same adjusted side position will achieve approximately the same length of ribs on the loin piece regardless of whether it is a middle with curved ribs or flat ribs. The saw blade may for instance have an inclination which corresponds approximately to the inclination of a line connecting the ends of a circular curve, the radius of which is the length of the loin bones and which starts from the rib cut in the middle with flat ribs and ends at the rib cut in the middle with curved ribs.

Behind the saw 3 the apparatus has a second cutting device to complete the division of the middle into a loin piece and a belly piece. The device comprises a circular knife 12, which cuts through the meat and fat of the middle from the rind side up to the cut ribs and perhaps further up in the track made in the ribs by the rib saw. The blade can be slid sideways and adjusted to various angles of cut, as shown by the arrows, thus allowing the position of the cut to be adjusted as desired both before and after cutting.

Furthermore, a conveyor belt 13 is placed behind the saw 3, which belt is designed to support the belly part after the cutting of the ribs and to receive the cut off belly piece after the meat has been cut. The belt is at a fixed position so as not to press the middle up against the saw 3 but at most take a small share of the weight of the middle when the ribs are divided.

After the division of the middle into a loin piece and a belly piece no bone splinters are found on the pieces and the division is accurate and of good quality as well as in accordance with traditional division. Cuts of high standard have been achieved. The resilient suspension and the use of the depth stop for the saw means that the saw blade follows the rib surface closely with light pressure on the surface, which is of great importance for the result.

In a special embodiment the cutting depth can be adjusted automatically to the individual middle to avoid cutting into the meat below the ribs. The position of the depth stop may be adjusted in relation to the active cutting edge of the saw blade to provide different cutting depths, for instance by means of a double air cylinder with four different work positions.

The adjustment can be made prior to the cutting to provide a high cutting depth if the cut is close to the spinal column and a lesser cutting depth if the cut is further away from the spinal column. In addition, the adjustment can be regulated during cutting so that the cut is deepest in the beginning of the cutting where the ribs are thickest and less deep in the hip end of the middle.

The cutting depth can for instance vary with 10 to 15 mm.

## Claims

1. An apparatus for cutting through the ribs of a middle (2) from a carcass, comprising:
a line conveyor (1) for a middle;
a cutting device (3) with a rotating circular blade (3c) for cutting ribs (2b) in the middle from the rib side of the middle while it is conveyed by the conveyor (1), and a depth stop (4) for the circular blade (3c) with a sliding surface designed to abut against the rib side of the middle during cutting; and
a suspension (7,8,9) for the cutting device providing a pressure on the rib side from the depth stop. (4) during cutting and allowing the cutting device (3) to move according to the shape of the rib side at the cutting line guided by contact of the depth stop with the rib surface;
**characterised in that** the line conveyor has retention means comprising grippers (1a,1b) for gripping and retaining for the spinal column parts (2a) of a middle, and transport means for conveyance of a retained middle with the spinal column parts mainly lying in the conveyor's direction of conveyance;
and **in that** the depth stop (4) lies on the side of the blade (3c) closest to the retention means (1a,1b) for the spinal column parts (2a) of the middle.

2. An apparatus as claimed in claim 1, **characterised in that** means (9) are provided to apply pressure from the depth stop (4) on the rib surface during cutting which is no higher than necessary to keep the depth stop in constant contact with the rib surface.

3. An apparatus as claimed in claim 1 or claim 2, **characterised in that** means (9) are provided to reduce the pressure from the cutting device on the rib side.

4. An apparatus as claimed in any one of the preceding claims, **characterised in that** means are provided to move the blade (3c) sideways during cutting away from the retention means (1a,1b) for the spinal column parts (2a).

5. An apparatus as claimed in any one of the preceding claims, **characterised in that** the arrangement is such that a pressure is applied to the rind side of the middle in the direction of the cut location, which is zero or considerably less than the pressure applied by the depth stop on the rib side.

6. An apparatus as claimed in any one of the preceding claims, **characterised in that** the middle is unsupported on the rind side.

7. An apparatus as claimed in any one of the preceding claims, **characterised in that** the circular blade (3c) and the plane in which the suspension allows the blade to move are inclined, with the active cutting area of the blade being closer to the retention means (1a, 1b) for the spinal column parts (2a) than the opposite, inactive area of the blade.

8. An apparatus as claimed in any one of the preceding claims, **characterised in that** the circular blade (3c) and the blade's plane of movement are inclined at an angle of 45° to 65° in relation to the middle's split plane in the spinal column.

9. An apparatus as claimed in any one of the preceding claims, **characterised in that** the cutting device (3) is suspended from an arm (6) that can swivel around an axle (7) which is mainly perpendicular to the blade plane and at a horizontal distance from the blade's axis of rotation.

10. An apparatus as claimed in any one of the preceding claims, **characterised in that** it comprises means (9) to move the cutting device (3) away from the rib side in a controlled way.

11. An apparatus as claimed in any one of the preceding claims, **characterised in that** it comprises means (11) for the adjustment of the blade's sideways position in a controlled way prior to cutting.

12. An apparatus as claimed in any one of the preceding claims, **characterised in that** it comprises a second cutting device with a circular blade (12) for subsequent cutting of meat and fat from the rind side of the middle and for dividing the middle into loin and belly.

13. A method for cutting through ribs of a middle from a carcass, in which:
the middle is conveyed by means of a line conveyor with the spinal column parts mainly lying in the conveyor's direction of conveyance; and
during its conveyance by the conveyor (1) the middle is conveyed past a cutting device (3) with a rotating circular blade (3c) placed on the rib side of the middle, which performs cutting of the ribs guided by a depth stop (4) for the circular blade with a sliding surface abutting against the rib side of the middle with a pressuring during cutting, whereby the cutting device (3) is allowed to move in accordance with the shape of the rib side at the cutting line guided by the contact of the depth stop with the rib surface;
**characterised in that** retention means (1a,1b) on the line conveyor (1).are made to grip and retain a middle (2) by its spinal column parts (2a) and **in that** the depth stop (4) lies on the side of the blade (3c) closest to the retention means (1a,1b) for the spinal column parts (2a) of the middle.

14. A method as claimed in claim 13, **characterised in that** the blade (3a) performs a sideways movement before and/or during the cutting of the ribs (2b).

15. A method as claimed in claim 13 or claim 14, **characterised in that** by means of a second cutting device with a circular blade (12) subsequent cutting of meat and fat are carried out from the rind side of the middle and division of the middle into loin and belly.

16. A method as claimed in any of claims 13 to 15, **characterised in that** the circular blade (3c) and the plane in which the suspension allows the blade to move are inclined, with the active cutting area of the blade being closer to the retention means (1a, 1b) for the spinal column parts (2a) than the opposite, inactive area of the blade.

## Patentansprüche

1. Eine Vorrichtung zum Durchschneiden der Rippen eines Mittelstücks (2) von einer Karkasse, umfassend:
Einen Linienförderer (1) für ein Mittelstück;
eine Schneideinrichtung (3) mit einem rotierenden Kreismesser (3c) zum Schneiden der Rippen (2b) im Mittelstück von der Rippenseite des Mittelstücks, während dieses durch den Förderer (1) gefördert wird, und einen Tiefenstopper (4) für das Kreismesser (3c) mit einer Gleitoberfläche, die ausgebildet ist, um während des Schneidens gegen die Rippenseite des Mittelstücks zu drücken; und
eine Aufhängung (7, 8, 9) für die Schneideinrichtung, die einen Druck auf die Rippenseite von dem Tiefenstopper (4) während des Schneidens ausübt und es der Schneideinrichtung (3) erlaubt, sich gemäß der Form der Rippenseite an der Schneidlinie, geführt durch Kontakt des Tiefenstoppers mit der Rippenoberfläche, zu bewegen;
**dadurch gekennzeichnet , dass** der Linienförderer Rückhaltemittel aufweist, die Greifer (1a, 1b) zum Greifen und Zurückhalten für die Wirbelsäulenteile (2a) des Mittelstücks umfassen, und Transportmittel zum Fördern eines zurückgehaltenen Mittelstücks mit den im wesentlichen in Förderrichtung des Förderers liegenden Wirbelsäulenteilen;
und **dadurch**, dass der Tiefenstopper (4) auf der Seite des Messers (3c) liegt, die am nächsten an den Rückhaltemitteln (1a, 1b) für die Wirbelsäulenteile (2a) des Mittelstücks liegen.

2. Eine Vorrichtung wie in Anspruch 1 beansprucht, **dadurch gekenn-zeichnet**, dass Mittel (9) vorgesehen sind, um während des Schneidens Druck von dem Tiefenstopper (4) auf die Rippenoberfläche aufzubringen, der nicht höher als notwendig ist, um den Tiefenstopper in permanentem Kontakt mit der Rippenoberfläche zu halten.

3. Eine Vorrichtung wie beansprucht in Anspruch 1 oder Anspruch 2, **dadurch gekennzeichnet , dass** Mittel (9) zum Reduzieren des Druckes von der Schneideinrichtung auf die Rippenseite vorgesehen sind.

4. Eine Vorrichtung wie beansprucht in einem der vorhergehenden Ansprüche, **dadurch gekennzeichnet, dass** Mittel vorgesehen sind, um das Messer (3c) während des Wegschneidens von den Rückhaltemitteln (1a, 1b) für die Wirbelsäulenteile (2a) seitwärts zu bewegen.

5. Eine Vorrichtung wie beansprucht in einem der vorhergehenden Ansprüche, **dadurch gekennzeichnet , dass** die Anordnung derart ausgebildet ist, dass ein Druck auf die Schwartenseite des Mittelstücks in Richtung der Sclmeidposition aufgebracht wird, der null oder erheblich kleiner als der Druck ist, der durch den Tiefenstopper auf die Rippenseite aufgebracht wird.

6. Eine Vorrichtung wie beansprucht in einem der vorhergehenden Ansprüche, **dadurch gekennzeichnet, dass** das Mittelstück auf der Schwartenseite ungestützt ist.

7. Eine Vorrichtung wie beansprucht in einem der vorhergehenden Ansprüche, **dadurch gekennzeichnet, dass** das Kreismesser (3c) und die Ebene, in der es die Aufhängung dem Messer erlaubt, sich zu bewegen, geneigt sind, wobei der aktive Schneidbereich des Messers näher an den Rückhaltemitteln (1a, 1b) für die Wirbelsäulenteile (2a) ist als der gegenüberliegende, inaktive Bereich des Messers.

8. Eine Vorrichtung wie beansprucht in einem der vorhergehenden Ansprüche, **dadurch gekennzeichnet, dass** das Kreismesser (3c) und die Bewegungsebene des Messers in Bezug auf die Teilungsebene des Mittelstücks in der Wirbelsäule in einem Winkel von 45° bis 65° geneigt sind.

9. Eine Vorrichtung wie beansprucht in einem der vorhergehenden Ansprüche, **dadurch gekennzeichnet, dass** die Schneideinrichtung (3) an einem Arm (6) aufgehängt ist, der um eine Achse (7) herum drehen kann, die hauptsächlich senkrecht zu der Messerebene und in einem horizontalen Abstand von der Rotationsachse des Messers verläuft.

10. Eine Vorrichtung wie beansprucht in einem der vorhergehenden Ansprüche, **dadurch gekennzeichnet, dass** sie Mittel (9) umfasst, um die Schneideinrichtung (3) auf gesteuerte Weise weg von der Rippenseite zu bewegen.

11. Eine Vorrichtung wie beansprucht in einem der vorhergehenden Ansprüche, **dadurch gekennzeichnet, dass** sie Mittel (11) für die gesteuerte Einstellung der Seitenposition des Messers vor dem Schneiden umfasst.

12. Eine Vorrichtung wie beansprucht in einem der vorhergehenden Ansprüche, **dadurch gekennzeichnet , dass** sie eine zweite Schneideinrichtung mit einem Kreismesser (12) zum nachfolgenden Schneiden von Fleisch und Fett von der Schwartenseite des Mittelstücks und zum Teilen des Mittelstücks in Loin und Bauch umfasst.

13. Ein Verfahren zum Durchschneiden von Rippen eines Mittelstücks von einer Karkasse, in dem:
das Mittelstück mittels eines Linienförderers mit im wesentlichen in Förderrichtung des Förderers liegenden Wirbelsäulenteilen gefördert wird; und
während ihres Fördems durch den Förderer (1) das Mittelstück an einer Schneideinrichtung (3) mit einem rotierenden Kreismesser (3c) vorbei gefördert wird, das auf der Rippenseite des Mittelstücks angeordnet ist, dass das Schneiden der Rippen, geführt durch einen Tiefenstopper (4) für das Kreismesser mit einer Gleitfläche, durchführt, die während des Schneidens gegen die Rippenseite des Mittelstücks mit einem Druck anliegt, wodurch es der Schneideinrichtung (3) erlaubt ist, sich, geführt durch den Kontakt des Tiefenstoppers mit der Rippenoberfläche, entsprechend der Form der Rippenseite an der Schneidlinie zu bewegen;
**dadurch gekennzeichnet , dass** Rückhaltemittel (1a, 1b) auf dem Linienförderer (1) veranlasst werden, ein Mittelstück (2) an seinen Wirbelsäulenteilen (2a) zu greifen und zurückzuhalten und **dadurch**, dass der Tiefenstopper (4) auf der am nächsten zu den Rückhaltemitteln (1a, 1b) für die Wirbelsäulenteile (2a) des Mittelstücke befindlichen Seite des Messers (3c) liegt.

14. Ein Verfahren wie in Anspruch 13 beansprucht, **dadurch gekennzeichnet, dass** das Messer (3a) vor und/oder während des Schneidens der Rippen (2b) eine Seitenbewegung ausführt.

15. Ein Verfahren wie in Anspruch 13 oder 14 beansprucht, **dadurch gekennzeichnet, dass** mittels einer zweiten Schneideinrichtung mit einem Kreismesser (12) nachfolgendes Schneiden von Fleisch und Fett von der Schwartenseite des Mittelstücks und Teilen des Mittelstücks in Loin und Bauch ausgeführt wird.

16. Ein Verfahren wie in einem der Ansprüche 13 bis 15 beansprucht, **dadurch gekennzeichnet , dass** das Kreismesser (3c) und die Ebene, in der es die Aufhängung dem Messer erlaubt, sich zu bewegen, geneigt sind, wobei der aktive Schneidbereich des Messers näher an den Rückhaltemitteln (1a, 1b) für die Wirbelsäulenteile (2a) ist als der gegenüberliegende, inaktive Bereich des Messers.

## Revendications

1. Appareil de découpe des côtes d'une partie médiane (2) d'une demi-carcasse, comprenant :
une bande de transport (1) pour une partie médiane ;
un dispositif de découpe (3) doté d'une lame circulaire rotative (3c) destiné à découper des côtes (2b) dans la partie médiane depuis le côté côte de la partie médiane pendant qu'elle est transportée par la bande de transport (1), et une butée de profondeur (4) pour la lame circulaire (3c) dotée d'une surface glissante conçue pour venir en butée contre le côté côte de la partie médiane pendant la découpe ; et
une suspension (7, 8, 9) pour le dispositif de découpe fournissant une pression sur le côté côte depuis la butée de profondeur (4) pendant la découpe et permettant au dispositif de découpe (3) de se déplacer en suivant la forme du côté côte au niveau de la ligne de découpe, guidé par le contact de la butée de profondeur avec la surface de côte ;
**caractérisé en ce que** la bande de transport présente des moyens de retenue comprenant des poignées (1a, 1b) destinées à saisir et à retenir les parties de colonne vertébrale (2a) d'une partie médiane, et des moyens de transport destinés à transporter une partie médiane retenue avec les parties de colonne vertébrale situées principalement dans la direction de transport de la bande de transport ;
et **en ce que** la butée de profondeur (4) se situe sur le côté de la lame (3c) la plus proche des moyens de retenue (1a, 1b) pour les parties de colonne vertébrale (2a) de la partie médiane.

2. Appareil selon la revendication 1, **caractérisé en ce que** des moyens (9) sont prévus pour appliquer une pression depuis la butée de profondeur (4) sur la surface de la côte pendant la découpe qui n'est pas supérieure à celle nécessaire pour maintenir la butée de profondeur en contact constant avec la surface de côte.

3. Appareil selon la revendication 1 ou la revendication 2, **caractérisé en ce que** des moyens (9) sont prévus pour réduire la pression provenant du dispositif de découpe sur le côté côte.

4. Appareil selon l'une quelconque des revendications précédentes, **caractérisé en ce que** des moyens sont prévus pour éloigner la lame (3c) latéralement pendant la découpe des moyens de retenue (1a, 1b) pour les parties de colonne vertébrale (2a).

5. Appareil selon l'une quelconque des revendications précédentes, **caractérisé en ce que** l'agencement est tel qu'une pression est appliquée sur le côté couenne de la partie médiane dans la direction de l'emplacement de la découpe, qui est nulle ou considérablement inférieure à la pression appliquée par la butée de profondeur sur le côté côte.

6. Appareil selon l'une quelconque des revendications précédentes, **caractérisé en ce que** la partie médiane n'est pas supportée sur le côté couenne.

7. Appareil selon l'une quelconque des revendications précédentes, **caractérisé en ce que** la lame circulaire (3c) et le plan, dans lequel la suspension permet à la lame de se déplacer, sont inclinés, la zone de découpe active de la lame étant plus proche des moyens de retenue (1a, 1b) des parties de colonne vertébrale (2a) que la zone inactive opposée de la lame.

8. Appareil selon l'une quelconque des revendications précédentes, **caractérisé en ce que** la lame circulaire (3c) et le plan de déplacement de la lame sont inclinés selon un angle de 45° à 65° par rapport au plan coupé de la partie médiane dans la colonne vertébrale.

9. Appareil selon l'une quelconque des revendications précédentes, **caractérisé en ce que** le dispositif de découpe (3) est suspendu depuis un bras (6) qui peut pivoter autour d'un axe (7) qui est principalement perpendiculaire au plan de la lame et à une distance horizontale de l'axe de rotation de la lame.

10. Appareil selon l'une quelconque des revendications précédentes, **caractérisé en ce qu'**il comprend des moyens (9) destinés à éloigner le dispositif de découpe (3) du côté côte d'une façon contrôlée.

11. Appareil selon l'une quelconque des revendications précédentes, **caractérisé en ce qu'**il comprend des moyens (11) pour le réglage de la position latérale de la lame d'une façon contrôlée avant la découpe.

12. Appareil selon l'une quelconque des revendications précédentes, **caractérisé en ce qu'**il comprend un second dispositif de découpe doté d'une lame circulaire (12) pour la découpe ultérieure de la viande et de la graisse à partir du côté couenne de la partie médiane et pour diviser la partie médiane en longe et flanc.

13. Procédé de découpe de côtes d'une partie médiane à partir d'une carcasse, dans lequel :
la partie médiane est transportée au moyen d'une bande de transport avec les parties de colonne vertébrale situées principalement dans la direction de transport de la bande de transport ; et
pendant son transport par la bande de transport (1), la partie médiane est transportée au-delà d'un dispositif de découpe (3) avec une lame circulaire rotative (3c) placée sur le côté côte de la partie médiane, qui exécute la découpe des côtes, guidé par une butée de profondeur (4) pour la lame circulaire doté d'une surface de glissement venant en butée contre le côté côte de la partie médiane avec une pressurisation pendant la découpe, le dispositif de découpe (3) étant autorisé à se déplacer en suivant la forme du côté côte au niveau de la ligne de découpe, guidé par le contact de la butée de profondeur avec la surface de côte ;
**caractérisé en ce que** des moyens de retenue (1a, 1b sur la bande de transport (1) sont fabriqués pour saisir et retenir une partie médiane (2) par ses parties de colonne vertébrale (2a) et **en ce que** la butée de profondeur (4) se situe sur le côté de la lame (3c) le plus proche des moyens de retenue (1a, 1b) pour les parties de colonne vertébrale (2a) de la partie médiane.

14. Procédé selon la revendication 13, **caractérisé en ce que** la lame (3a) exécute un mouvement latéral avant et/ou pendant le découpage des côtes (2b).

15. Procédé selon la revendication 13 ou la revendication 14, **caractérisé en ce qu'**au moyen d'un second dispositif de découpe doté d'une lame circulaire (12), la découpe ultérieure de la viande et de la graisse est réalisée à partir du côté couenne de la partie médiane ainsi que la division de la partie médiane en longe et flanc.

16. Procédé selon l'une quelconque des revendications 13 à 15, **caractérisé en ce que** la lame circulaire (3c) et le plan, dans lequel la suspension permet à la lame de se déplacer sont inclinés, la zone de découpe active de la lame étant plus proche des moyens de retenue (1a, 1b) des parties de colonne vertébrale (2a) que la zone inactive opposée de la lame.
